Europäisches Patentamt

European Patent Office

Office européen des brevets

(19)

(11) **EP 0 550 305 B1**

(12) **FASCICULE DE BREVET EUROPEEN**

(45) Date de publication et mention
de la délivrance du brevet:
**17.04.1996 Bulletin 1996/16**

(51) Int. Cl.$^6$: **C04B 41/85**, C04B 41/89

(21) Numéro de dépôt: **92403405.1**

(22) Date de dépôt: **15.12.1992**

(54) **Procédé de réalisation d'une protection contre l'oxydation de produits en matériau composite, et produits ainsi protégés**

Verfahren zum Schützen eines Kompositmaterials gegen Oxydation sowie derart geschützte Produkte

Method of protecting a composite material against oxidation, and products protected in this way

(84) Etats contractants désignés:
**BE DE GB IT SE**

(30) Priorité: **30.12.1991 FR 9116320**

(43) Date de publication de la demande:
**07.07.1993 Bulletin 1993/27**

(73) Titulaire: **SOCIETE EUROPEENNE DE PROPULSION**
**F-92150 Suresnes (FR)**

(72) Inventeurs:
 • **Thebault, Jacques**
  **F-33200 Bordeaux (FR)**

 • **Lacoste, Marc**
  **F-33000 Villenave d'Ornon (FR)**
 • **Nale, Alain**
  **F-33240 Saint Romain la Virvee (FR)**

(74) Mandataire: **Joly, Jean-Jacques et al**
 **Cabinet Beau de Loménie**
 **158, rue de l'Université**
 **F-75340 Paris Cédex 07 (FR)**

(56) Documents cités:
 **EP-A- 0 336 404**      **EP-A- 0 420 187**
 **DE-C- 967 846**       **GB-A- 812 740**

Printed by Rank Xerox (UK) Business Services
2.11.2/3.4

**Description**

La présente invention concerne la protection contre l'oxydation de produits en matériau composite.

Le domaine d'application de l'invention est plus particulièrement celui des matériaux composites réfractaires destinés à être utilisés à des températures relativement élevées. De tels matériaux composites sont constitués par un renfort fibreux en matériau réfractaire densifié par une matrice également réfractaire qui comble au moins partiellement la porosité initiale du renfort fibreux. Les matériaux constitutifs du renfort fibreux et de la matrice sont typiquement choisis parmi le carbone et les céramiques.

Dans le cas de produits en matériau composite contenant du carbone, une protection contre l'oxydation est indispensable pour éviter une rapide détérioration des produits par oxydation du carbone lorsque les produits sont utilisés en atmosphère oxydante dès que la température dépasse 350°C. Or, les matériaux composites réfractaires contiennent très fréquemment du carbone, en particulier en tant que constituant des fibres formant le renfort fibreux ou en tant que constituant d'au moins une partie de la matrice. Une couche mince de carbone peut aussi être formée sur les fibres du renfort fibreux pour constituer une interphase destinée à assurer une liaison adéquate entre le renfort fibreux et la matrice.

Une barrière contre l'oxygène ambiant est généralement formée en interposant une couche continue de céramique résistant à l'oxydation entre le carbone contenu dans le produit et la surface extérieure de celui-ci. Ceci est réalisé soit en formant la matrice, au moins dans sa partie la plus externe, par une telle céramique, soit en formant un revêtement externe constitué par cette céramique sur le produit en matériau composite. La céramique utilisée est typiquement un carbure réfractaire, en particulier le carbure de silicium (SiC). D'autres carbures peuvent convenir, comme le carbure de zirconium (ZrC) ou d'hafnium (HfC).

Une telle couche de carbure réfractaire, qu'elle soit constitutive de la matrice ou qu'elle forme un revêtement externe du produit, est inévitablement sujette à micro-fissuration. Les micro-fissures apparaissent inévitablement lors de l'utilisation du produit par suite des contraintes mécaniques qui lui sont appliquées et de différences entre les coefficients de dilatation thermique des constituants du matériau composite. Des défauts analogues peuvent même déjà apparaître au stade de l'élaboration du produit.

En raison de la porosité résiduelle quasi-inévitable du matériau composite (le comblement de la porosité initiale du renfort fibreux par la matrice n'est en pratique jamais complet), le phénomène de micro-fissuration se produit non seulement en surface, mais aussi à coeur du produit. Les fissures procurent ainsi à l'oxygène ambiant un accès au carbone sous-jacent.

Pour résoudre ce problème, il est connu d'adjoindre une couche de protection ayant des propriétés cicatrisantes pour colmater, remplir ou étancher les fissures. Au cours de l'utilisation du produit, les variations des contraintes mécaniques et thermiques se traduisent par des variations de la géométrie des fissures, notamment par rapprochement ou écartement de leurs lèvres. Il est donc nécessaire que la couche de protection cicatrisante puisse suivre ces mouvements sans elle-même se fissurer. C'est pourquoi cette couche de protection est habituellement constituée d'éléments qui constituent un verre, ou qui sont susceptibles de constituer un verre après oxydation, le verre étant choisi pour avoir un comportement visqueux à la température d'utilisation du produit.

Toutefois, la couche de protection cicatrisante à caractère vitreux présente une moindre résistance à l'abrasion que la couche de carbure et présente le risque, à l'état visqueux, d'être expulsée par soufflage. Or, dans certaines applications, par exemple pour des pièces de moteurs aéronautiques ou pour des revêtements d'avions spatiaux, la surface des pièces en matériau composite utilisées est confrontée à un écoulement gazeux à grande vitesse ou centrifugation produisant cet effet de soufflage.

Il a alors été proposé de munir la couche de protection cicatrisante d'un revêtement externe protecteur résistant à l'abrasion et au soufflage, par exemple un revêtement externe en carbure réfractaire tel que SiC. Un tel revêtement externe peut être réalisé par exemple par dépôt ou infiltration chimique en phase vapeur . La protection du produit en matériau composite est alors réalisée par plusieurs couches comprenant une couche cicatrisante à caractère vitreux comprise entre deux couches en carbure réfractaire.

La présente invention a pour but de fournir un procédé permettant de réaliser une protection contre l'oxydation d'un matériau composite contenant du carbone qui soit efficace dans un domaine de température relativement étendu, environ 350° C à 1700° C.

La présente invention a aussi pour but de fournir un procédé qui soit d'une mise en oeuvre simple tout en procurant une couche de protection ayant à la fois des propriétés cicatrisantes et une résistance élevée à l'abrasion et au soufflage.

Ce but est atteint par un procédé comprenant, conformément à l'invention, les étapes de :

- formation sur le produit en matériau composite à protéger d'un revêtement contenant un mélange d'une céramique réfractaire non oxyde sous forme finement divisée, d'au moins un oxyde réfractaire sous forme finement divisée ayant des propriétés cicatrisantes par formation d'un verre, et d'un liant constitué par un polymère précurseur d'une céramique réfractaire non oxyde , et

- transformation du polymère en céramique, pour obtenir une couche de protection comprenant une phase céramique réfractaire non oxyde et une phase cicatrisante constituant deux réseaux interpénétrés.

Par phase cicatrisante, on entend ici une phase capable d'assurer un colmatage de fissures par passage à l'état visqueux à la température d'utilisation du produit protégé, tandis que par phase céramique réfractaire, on entend ici une céramique telle qu'un carbure, un nitrure, un siliciure ou un borure, ayant une température de fusion ou de ramollissement supérieure à la température d'utilisation du produit, de préférence supérieure à 1700° C.

Ainsi, le procédé selon l'invention est remarquable en ce qu'il permet de satisfaire les exigences contradictoires d'une protection réfractaire "dure", résistant à l'abrasion, au soufflage, et à la centrifugation, et d'une protection auto-cicatrisante, donc "molle".

Un autre avantage du procédé selon l'invention tient à ce que le revêtement peut être formé très facilement. En effet, au mélange constitué par la céramique réfractaire et le ou les oxydes finement divisés avec le polymère précurseur de céramique, il peut être ajouté un solvant du précurseur de manière à obtenir une suspension liquide. Le revêtement est alors réalisé par trempage du produit dans un bain de cette suspension liquide, ou par pistolettage ou au pinceau, suivi d'un séchage pour éliminer le solvant.

Les charges de céramique réfractaire en partie constitutives de la phase réfractaire et celles d'oxyde(s) constitutives de la phase cicatrisante sont à l'état finement divisé. Il s'agit par exemple de poudres d'une granulométrie de préférence inférieure à 50 microns et/ou de trichites (whiskers) ou de fibres courtes.

La céramique réfractaire est choisie parmi les carbures réfractaires, tels que SiC, ZrC, HfC, siliciures réfractaires tels que le siliciure de molybdène MoSi2, nitrures, borures de température de fusion ou décomposition de préférence supérieure à 1700° C.

Le ou les oxydes réfractaires constitutifs de la phase cicatrisante sont choisis notamment parmi la silice SiO2, et l'alumine Al2O3. D'autres oxydes peuvent être ajoutés afin de régler la plage de température dans laquelle le verre présente un comportement visqueux utile pour la cicatrisation ; il s'agit notamment d'hydroxyde de baryum Ba(OH)2 qui génère l'oxyde de baryum (BaO), d'oxyde de calcium (CaO), ...

De préférence, dans le revêtement constitué par les charges de céramique et d'oxyde(s) et par le polymère précurseur de céramique, les charges de céramique sont présentes à raison de 35 % à 85 % en volume, les charges d'oxyde(s) constitutives de la phase cicatrisante à raison de 10 % à 65 % en volume, et la céramique provenant du polymère à raison de 3 % à 55 % en volume.

Le polymère précurseur de céramique permet, par sa réticulation préalable à la transformation en céramique, de constituer un réseau tridimensionnel emprisonnant les charges de céramique réfractaire et celles d'oxyde(s) formant la phase cicatrisante. Tout polymère précurseur de céramique réfractaire, en particulier un polymère utilisé par la fabrication de fibres en céramique réfractaire, peut être utilisé. A titre d'exemple, peuvent être cités le polycarbosilane (PCS) précurseur de SiC , le polytitanocarbosilane (PTCS) précurseur de SiC, ou d'autres précurseurs utilisés pour obtenir des fibres ou des films céramique dans les systèmes Si-C-O ou Si-C-N, comme des silicones ou des polysilazanes.

Après transformation du polymère précurseur en céramique, l'élaboration de la couche de protection peut être poursuivie par un traitement thermique réalisé à une température supérieure à la température de fusion ou de ramollissement de la phase cicatrisante. Ce traitement thermique final permet aux charges constitutives de la phase cicatrisante de fondre et de se lier entre elles. Il en résulte la formation d'une phase continue (effet de vitrification )interpénétrée avec la phase céramique réfractaire.

Selon un mode préféré de réalisation de l'invention, le traitement thermique final est réalisé en atmosphère oxydante, par exemple sous air. Ceci a pour effet de favoriser l'établissement de la continuité de la phase cicatrisante. Le traitement final sous atmosphère oxydante a aussi pour effet d'éviter une destruction prématurée de la phase céramique réfractaire qui peut intervenir, lorsque la pression partielle d'oxygène est trop faible, par une réaction de type oxydation active. Une telle oxydation active donnant naissance à des espèces volatiles, peut notamment survenir entre SiC (constituant le carbure réfractaire) et $SiO_2$ (composant de la phase cicatrisante) suivant la réaction :

$$SiC + SiO_2 \rightarrow SiO + CO$$

Afin d'éviter l'oxydation du matériau composite sous-jacent, la durée du traitement thermique final de vitrification est choisie relativement courte, de préférence inférieure à 1 h., et le produit est porté directement à la température voulue.

On notera que le produit protégé peut être utilisé sans avoir subi le traitement thermique final. La vitrification de la phase cicatrisante est alors réalisée des que le produit, lors de son utilisation, est exposé à la température nécessaire à cette vitrification.

La couche de protection obtenue par le procédé conforme à la présente invention peut faire partie d'un système de protection plus complexe de type multicouche pour étendre le domaine d'efficacité dans une large plage de température.

C'est ainsi que la couche de protection selon la présente invention peut être revêtue d'une couche de protection externe ayant une plus grande efficacité dans la partie basse d'une plage de température allant de 350°C à 1700° C.

La couche de protection selon la présente invention peut aussi être formée sur une couche de protection interne ayant une plus grande efficacité aux très hautes températures, en particulier une couche efficace contre l'oxydation active de SiC à des températures supérieures à 1700° C à la pression atmosphérique.

Bien entendu, la couche de protection selon l'invention peut être combinée à la fois avec une couche de protection interne efficace aux températures les plus hautes et une couche de protection externe efficace aux températures les moins hautes afin d'étendre au maximum le domaine d'efficacité de la protection contre l'oxydation.

Des exemples de mise en oeuvre de l'invention seront décrits ci-après, à titre indicatif mais non limitatif.

On se référera aux dessins joints sur lesquels:

- la figure 1 est une vue partielle, en coupe, illustrant très schématiquement une couche de protection obtenue par un procédé conforme à l'invention, et
- la figure 2 illustre la variation de la viscosité en fonction de la température pour des verres de compositions différentes.

Dans les exemples qui suivent, le produit à protéger est réalisé en un matériau composite de type C/SiC, c'est-à-dire constitué d'un renfort fibreux en carbone densifié par une matrice en carbure de silicium. Dans ces exemples, le renfort fibreux est constitué par des strates de tissu en carbone superposées, et la matrice SiC est formée par infiltration chimique en phase vapeur suivant un procédé tel que décrit dans le document FR-A-2 401 888.

Bien entendu, l'invention est applicable à des matériaux composites dans lesquels le renfort fibreux est formé à partir de différentes textures, unidirectionnelles (fils, câbles) ou bidirectionnelles (voiles de feutre, ruban, tissu). Dans le cas de textures bidirectionneclles, celles-ci peuvent être superposées en strates à plat ou drapées suivant la forme désirée du produit, ou enroulées sur elles-mêmes, les couches superposées étant éventuellement liées entre elles par aiguilletage ou implantation de fils pour former un renfort tridimensionnel (3D). En outre, le renfort fibreux peut être en un matériau autre que le carbone, en particulier le carbure de silicium ou un oxyde réfractaire (par exemple zircone). Les fibres sont alors revêtues d'une couche mince destinée à former une interphase d'adaptation entre le renfort fibreux et la matrice.

Par ailleurs, la matrice SiC peut être obtenue non pas par voie gazeuse, mais par imprégnation du renfort fibreux par un précurseur de SiC, cette imprégnation étant suivie de la transformation du précurseur en SiC.

On notera encore que l'invention n'est pas limitée dans son application aux matériaux composites à matrice SiC, mais, plus généralement vise les matériaux composites contenant du carbone, en particulier les matériaux composites carbone/carbone (C/C), et, habituellement, un constituant réfractaire comme un carbure (tel que SiC, ZrC, HfC), un nitrure, un bordure ou un siliciure, celui-ci étant présent au moins en surface du matériau, soit en tant que constituant de la matrice, dans la partie de celle-ci la plus éloignée des fibres, soit en tant que constituant d'un revêtement externe.

## Exemple 1

Un échantillon de produit en matériau composite C/SiC est muni d'une protection contre l'oxydation de la façon suivante.

Du polycarbosilane (PCS), précurseur de SiC est mis en solution dans du xylène à raison de 50 % en poids de PCS et 50 % en poids de xylène. A 10 parties en poids (pp) de cette solution sont incorporées 9 pp de poudre de SiC de granulométrie inférieure à 325 Mesh (c'est-à-dire inférieure à environ 47 microns) et 3 pp de poudre de silico-alumineux (SiO2-Al2O3) dont la température de fusion est environ égale à 1400°C.

La viscosité du mélange est ajustée par ajout de xylène pour obtenir la consistance adaptée au moyen utilisé pour son dépôt sur l'échantillon de C/SiC (application au pinceau, pistolettage, trempage, ...). A titre d'exemple, pour l'application au pinceau, on rajoute 10 pp de xylène.

Une première couche est appliquée à la surface de l'échantillon de C/SiC puis est séchée par évaporation du xylène en étuve ventilée à 120° C. Cette couche est portée à 350° C à l'air pendant 1 h. pour réticuler le PCS. Après réticulation, le PCS est insoluble dans le xylène, et une deuxième couche peut être appliquée sans re-dissoudre la première. Cette deuxième couche est séchée et réticulée comme la première.

L'échantillon ainsi revêtu est porté à 900° C en élevant la température d'environ 300° C par heure, dans un four sous atmosphère neutre, par exemple sous argon. Au cours de ce traitement thermique, le PCS réticulé est transformé en SiC.

L'échantillon subit ensuite un cycle de vitrification par introduction directe dans un four à 1550° C sous air. L'échantillon utilisé atteint cette température en environ 4 minutes. Il est maintenu à 1550° C pendant environ 15 minutes puis est directement retiré du four pour revenir à la température ambiante.

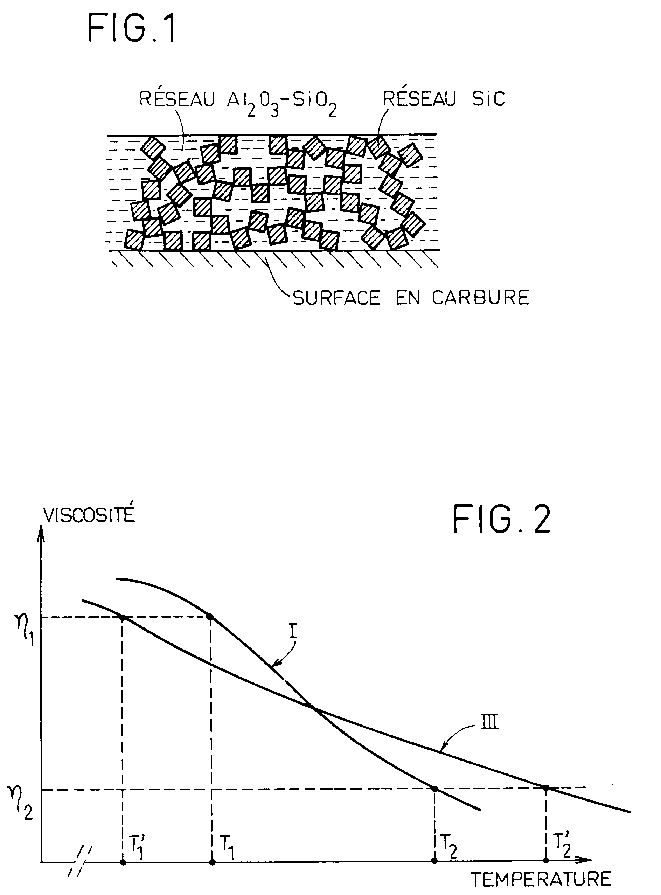

Le procédé décrit ci-avant conduit à un échantillon de matériau C/SiC dont la surface de la matrice est revêtue d'une couche de protection continue d'aspect vitrifié renfermant les particules de SiC et le réseau de SiC provenant de la transformation du PCS réticulé (voir figure 1). L'efficacité de la protection contre l'oxydation est testée en mesurant

4

la perte de masse de l'échantillon après un séjour de 9 heures à 1000° C dans un four sous atmosphère oxydante (air), la perte de masse provenant de l'oxydation du carbone constituant le renfort fibreux.

Un autre échantillon du même matériau C/SiC muni d'une couche de protection par le même procédé que décrit ci-dessus est testé dans des conditions identiques à l'exception de la température qui est de 1500° C au lieu de 1000° C.

A titre de comparaison, des mêmes tests sont effectués à 1000° C et 1500° C sur deux échantillons du même matériau C/SiC non revêtus de la couche de protection contre l'oxydation.

Le tableau I ci-après donne les valeurs mesurées de la perte de masse relative dm/m pour les différents échantillons testés.

TABLEAU I

| Protection contre l'oxydation | Température (°C) Durée (h) | Perte de masse relative |
|:---:|:---:|:---:|
| oui | 1000° C 9 h | 4 % |
| oui | 1500° C 9 h | 0,8 % |
| non | 1000° C 9 h | 39,3 % |
| non | 1500° C 9 h | 17,4 % |

Le tableau I illustre l'efficacité de la protection formée sur les échantillons. Il peut être aussi remarqué que cette efficacité est supérieure à 1500° C (où la perte de masse est divisée par environ 22) qu'à 1000° C (où la perte de masse est divisée par environ 9,8).

Exemple 2

On procède comme dans l'exemple 1, mais en remplaçant la solution de PCS dans le xylène par une solution à 50 % en poids de polytitanocarbosilane (PTCS) dans du xylène, cette solution étant commercialisée par la société japonaise UBE sous l'appellation "Tyranno Varnish".

Les produits protégés sont soumis aux mêmes tests d'oxydation à 1000° C et 1500° C que dans l'exemple 1. Les pertes de masse relatives observées après ces tests sont identiques à celles mesurées sur les échantillons protégés selon l'exemple 1.

La comparaison des exemples 1 et 2 montre que l'efficacité de la protection n'est pas altérée par le remplacement du PCS par un autre polymère précurseur de céramique réfractaire. Comme déjà indiqué, outre le PCS et le PTCS, l'utilisation d'autres polymères précurseurs connus pour la réalisation de films ou fibres céramiques, notamment dans les systèmes Si-C-O ou Si-C-N, peut être envisagée, par exemple les polysilazanes et les silicones.

Exemple 3

On procède comme dans l'exemple 1, mais en rajoutant 1,8 pp de $Ba(OH)_2$ au mélange appliqué à la surface du matériau C/SiC. Il en résulte, dans la couche de protection obtenue après traitement thermique de nappage-vitrification, la présence supplémentaire de BaO, provenant de $Ba(OH)_2$.

Des échantillons ainsi protégés sont soumis aux mêmes tests d'oxydation que dans l'exemple 1. A 1000° C, la perte de masse relative mesurée est de 2,3 %, et à 1500° C, elle est de 0,6 %.

Par rapport au matériau C/SiC non protégé, le rapport d'efficacité est d'environ 17 à 1000° C (au lieu de 9,8 dans l'exemple 1), et d'environ 29 à 1500° C (au lieu de 22 dans l'exemple 1). Par conséquent, l'efficacité générale de la protection a non seulement été augmentée, mais aussi a été rendue plus homogène dans la plage 1000 - 1500° C.

Ceci peut s'expliquer du fait que la présence de BaO a pour effet d'"allonger" le verre. Dans la figure 2, la courbe I montre la variation de la viscosité en fonction de la température pour un verre obtenu à partir des silico-alumineux de l'exemple 1. La phase cicatrisante est efficace lorsque sa viscosité est inférieure à une valeur limite $\eta 1$, au-dessus de laquelle la viscosité est trop forte pour assurer un réel pouvoir cicatrisant, et supérieure à une valeur limite $\eta 2$ en dessous de laquelle la phase vitreuse est trop fluide et est trop facilement éliminable par écoulement. Par conséquent, l'efficacité de la phase cicatrisante est effective pour des températures comprises entre des valeurs T1 et T2 correspondant à $\eta 1$ et $\eta 2$.

L'adjonction de BaO au silico-alumineux de l'exemple 1 conduit à la courbe III de la figure 2. On constate que la limite supérieure de viscosité $\eta 1$ est atteinte pour une température T'1 inférieure à T1, et la limite supérieure de viscosité $\eta 2$ est atteinte pour une température T'2 supérieure à T2. La plage d'efficacité de la phase cicatrisante a donc été élargie (le verre a été "allongé").

Cet effet d'"allongement" du verre par adjonction de BaO est connu en soi. Il est également connu que cet effet peut être obtenu par adjonction en quantité limitée de composés autres que BaO, notamment des composés d'alcalino-terreux tels que des sels ou oxydes de baryum, calcium, ... (par exemple CaO).

Exemple 4

On procède comme dans l'exemple 1, mais en remplaçant la poudre de silico-alumineux ayant un point de fusion de 1400° C par une poudre de silico-alumineux ayant un point de fusion de 1250° C, et en limitant la température du traitement thermique final à 1300° C.

Des tests d'oxydation sont effectués comme dans l'exemple 1. A 1000° C, la perte de masse relative mesurée est de 1,1 % et à 1500° C, la perte de masse relative mesurée est de 3,2 %.

Les exemples 3 et 4 montrent que le procédé conforme à l'invention peut être mis en oeuvre avec différentes phases vitreuses cicatrisantes, la composition de base des charges de silico-alumineux étant déterminée en fonction de la température d'utilisation du produit protégé, et des charges additionnelles étant introduites le cas échéant pour ajuster la plage d'efficacité de la protection.

Des poudres de silico-alumineux ayant différents points de fusion sont des produits bien connus, disponibles dans le commerce, utilisés notamment pour la fabrication de cônes pyrométriques.

Exemple 5

On procède comme dans l'exemple 1 en remplaçant les 9 pp de poudre de SiC par 16 pp de poudre de siliciure de molybdène ($MoSi_2$).

Les échantillons de matériau C/SiC protégés sont soumis au même test d'oxydation que dans l'exemple 1. Les valeurs de perte de masse relative mesurées sont identiques à celles observées sur les matériaux protégés comme dans l'exemple 1.

L'intérêt du remplacement le la poudre SiC par la poudre $MoSi_2$ tient au fait que $MoSi_2$ a une émissivité supérieure à celle de SiC. En effet, à 1100° C, avec SiC on obtient une émissivité $\varepsilon = 0,79$ et avec $MoSi_2$ on mesure $\varepsilon = 0,84$.

Selon l'application envisagée pour le matériau protégé, il est donc possible de modifier son émissivité en changeant la nature des charges de céramique réfractaire.

Exemple 6

On procède comme dans l'exemple 1 en remplaçant 50 % en poids de la poudre de SiC par des trichites de SiC (whiskers).

Des tests d'oxydation sont effectués comme dans l'exemple 1. La mesure de perte de masse montre que l'efficacité de la protection contre l'oxydation est la même que dans l'exemple 1.

Toutefois, l'inclusion de trichites de SiC à la place d'une partie de la poudre SiC procure à la couche de protection contre l'oxydation une meilleure résistance à la rayure.

Comme déjà indiqué, la couche de protection réalisée conformément à la présente invention peut être complétée par une couche de protection externe qui lui est superposée et/ou une couche de protection interne sous-jacente afin de parfaire la protection anti-oxydation respectivement vers les températures les moins élevées (partie basse de la plage de 350° C à 1700° C) et vers les très hautes temperatures (jusqu'au-delà de 1700° C).

La couche de protection externe est par exemple celle décrite dans la demande de brevet déposée en concomitance avec la présente demande de brevet et ayant pour titre "Procédé pour la protection contre l'oxydation de produits en matériau composite contenant du carbone, et produits obtenus par le procédé". Cette couche de protection externe est constituée par une composition contenant principalement un mélange de phosphates de silice et d'alumine appartenant au système $P_2O_5$-$SiO_2$-$Al_2O_3$ qui, après traitement thermique, se transforme en un ciment insoluble susceptible de former un verre auto-cicatrisant. La couche de protection externe peut être formée par pistolettage ou application au pinceau d'une suspension liquide contenant le mélange de phosphates de silice et d'alumine.

Pour un produit en matériau composite qui présente en surface une céramique formée par un composé du silicium, la couche de protection interne est par exemple celle décrite dans la demande de brevet français No 91 02 104.

Cette couche de protection interne est formée par un revêtement vitreux à base de silice avec interposition, entre la surface céramique et ce revêtement, d'un revêtement intermédiaire en alumine ou en précurseur de l'alumine. Le revêtement intermédiaire constitue une barrière de réaction entre la céramique formée par le composé du silicium et la silice du revêtement vitreux. En outre, le revêtement intermédiaire est apte à piéger, par formation de mullite, de la silice éventuellement formée par oxydation du composé du silicium. Cette couche de protection interne assure une fonction de protection contre l'oxydation tant dans des conditions correspondant au domaine d'oxydation active du composé du silicium que dans des conditions correspondant au domaine d'oxydation passive. Une interphase en mullite peut être formée d'un côté et/ou de l'autre du revêtement intermédiaire.

**Revendications**

1. Procédé de réalisation d'une protection contre l'oxydation comprenant au moins une céramique réfractaire et une composition cicatrisante, pour un produit en matériau composite, procédé caractérisé en ce qu'il comprend les étapes de :

   - formation sur le produit en matériau composite à protéger d'un revêtement contenant un mélange d'une céramique réfractaire non oxyde sous forme finement divisée, d'au moins un oxyde réfractaire sous forme finement divisée ayant des propriétés cicatrisantes par formation d'un verre, et d'un liant constitué par un polymère précurseur d'une céramique réfractaire non oxyde, et
   - transformation du polymère en céramique, pour obtenir une couche de protection comprenant une phase céramique réfractaire non oxyde et une phase cicatrisante constituant deux réseaux interpénétrés.

2. Procédé selon la revendication 1, caractérisé en ce que l'on forme ledit revêtement sur le produit en matériau composite à partir d'une suspension liquide comprenant ledit mélange auquel est ajouté un solvant du polymère précurseur de céramique.

3. Procédé selon la revendication 2, caractérisé en ce que le revêtement est formé par application de la composition liquide au pinceau ou par pistolettage, puis élimination du solvant.

4. Procédé selon la revendication 2, caractérisé en ce que le revêtement est formé par trempage dans un bain de la composition liquide puis élimination du solvant.

5. Procédé selon l'une quelconque des revendications 1 à 4, caractérisé en ce que l'on répète au moins une fois les étapes de formation d'un revêtement sur le produit en matériau composite et réticulation du polymère précurseur de céramique, avant transformation de celui-ci.

6. Procédé selon l'une quelconque des revendications 1 à 5, caractérisé en ce qu'il comprend en outre, après transformation du polymère précurseur en céramique, une étape de traitement thermique final réalisée à une température supérieure à la température de fusion ou de ramollissement de la phase cicatrisante.

7. Procédé selon la revendication 6, caractérisé en ce que le traitement thermique final est réalisé en portant le produit directement à la température nécessaire et en le maintenant à cette température pendant une durée relativement courte, en atmosphère oxydante.

8. Procédé selon l'une quelconque des revendications 1 à 7, caractérisé en ce que la céramique réfractaire à l'état finement divisé est choisie parmi les carbures, nitrures, borures et siliciures réfractaires.

9. Procédé selon l'une quelconque des revendications 1 à 8, caractérisé en ce que le ou les oxydes réfractaires à l'état finement divisé sont choisis dans le système silice - alumine.

10. Procédé selon la revendication 9, caractérisé en ce que le mélange constitutif du revêtement comprend en outre au moins un oxyde supplémentaire choisi parmi l'oxyde de baryum et l'oxyde de calcium.

11. Procédé selon l'une quelconque des revendications 1 à 10, caractérisé en ce que le polymère précurseur de céramique est choisi parmi le polycarbosilane, le polytitanocarbosilane, les polysilazanes et les silicones.

12. Procédé selon l'une quelconque des revendications 1 à 11, caractérisé en ce que, après formation de la couche de protection sur le matériau composite, on forme une couche de protection externe constituée par une composition contenant principalement un mélange de phosphates de silice et d'alumine.

13. Procédé selon l'une quelconque des revendications 1 à 12, caractérisé en ce que, pour la protection d'un produit en matériau composite dont la surface est en céramique réfractaire formée par un composé du silicium, on forme préalablement, sur la surface du produit, une couche de protection interne comprenant un revêtement vitreux à base de silice avec interposition, entre celui-ci et la surface céramique, d'un revêtement intermédiaire en alumine ou en précurseur de l'alumine.

14. Produit en matériau composite muni d'une protection contre l'oxydation comprenant au moins une céramique réfractaire et une composition cicatrisante,

EP 0 550 305 B1

caractérisé en ce que la protection est constituée au moins par une couche comprenant une phase continue de céramique réfractaire non oxyde formant un réseau tridimensionnel interpénétré avec une phase continue ayant des propriétés cicatrisantes par formation d'un verre.

15. Produit en matériau composite selon la revendication 14, caractérisé en ce que la phase continue de céramique réfractaire est choisie parmi les carbures, nitrures, borures et siliciures réfractaires.

16. Produit en matériau composite selon la revendication 15, caractérisé en ce que la phase continue de céramique réfractaire est du carbure de silicium.

17. Produit en matériau composite selon l'une quelconque des revendications 14 à 16, caractérisé en ce que la couche de protection comprend en outre des charges en céramique réfractaire sous forme finement divisée.

18. Produit en matériau composite selon la revendication 17, caractérisé en ce que les charges sont choisies parmi les carbures, nitrures, borures et siliciures réfractaires.

19. Produit en matériau composite selon l'une quelconque des revendications 14 à 18, caractérisé en ce que la phase continue ayant des propriétés cicatrisantes comprend au moins un oxyde choisi dans le système silice - alumine.

20. Produit en matériau composite selon la revendication 19, caractérisé en ce que la phase continue ayant des propriétés cicatrisantes comprend en outre au moins un oxyde choisi parmi l'oxyde de baryum et l'oxyde de calcium.

21. Produit en matériau composite selon l'une quelconque des revendications 14 à 20, caractérisé en ce qu'il comprend en outre une couche de protection externe constituée par un ciment insoluble dans l'eau formé à partir d'un mélange de phosphates de silice et d'alumine.

22. Produit en matériau composite selon l'une quelconque des revendications 14 à 20, dans lequel la protection contre l'oxydation est formée sur une surface du matériau composite en céramique constituée par un composé du silicium, caractérisé en ce qu'entre cette surface céramique et la couche de protection comprenant une phase continue de céramique réfractaire non oxyde interpénétrée avec une phase continue auto-cicatrisante, le produit est muni d'une couche de protection interne comprenant un revêtement vitreux à base de silice et un revêtement sous-jacent en alumine ou en précurseur de l'alumine.

**Claims**

1. Method of protecting a composite material product, comprising at least one refractory ceramic and a healing composition, against oxidation, method characterized in that it comprises the steps of:

   - forming a coating on the product of composite material to be protected, said coating containing a mixture of a non-oxide refractory ceramic in finely-divided form, at least one refractory oxide in finely-divided form and providing healing properties by forming a glass, and a binder constituted by a polymer that is a precursor of a non-oxide refractory ceramic, and
   - transforming the polymer into ceramic so as to obtain a protective layer comprising a non-oxide refractory ceramic phase and a healing phase together constituting two inter-penetrating lattices.

2. Method according to claim 1, characterized in that said coating is formed on the composite material product from a liquid suspension comprising said mixture to which a solvent is added for the ceramic precursor polymer.

3. Method according to claim 2, characterized in that the coating is formed by applying the liquid composition by means of a brush or by spraying, and then by eliminating the solvent.

4. Method according to claim 2, characterized in that the coating is formed by soaking in a bath of the liquid composition, and then by eliminating the solvent.

5. Method according to any one of claims 1 to 4, characterized in that the steps of forming a coating on the composite material product and of cross-linking the ceramic precursor polymer are repeated at least once before the coating is formed.

8

6. Method according to any one of claims 1 to 5, characterized in that it further comprises a final heat treatment step performed after the ceramic precursor polymer has been transformed and at a temperature higher than the melting or softening temperature of the healing phase.

7. Method according to claim 6, characterized in that the final heat treatment is performed by raising the product directly to the appropriate temperature and by maintaining it at said temperature for a relatively short period of time, in an oxidizing atmosphere.

8. Method according to any one of claims 1 to 7, characterized in that the refractory ceramic in the finely-divided state is selected from refractory silicides, borides, nitrides, and carbides.

9. Method according to any one of claims 1 to 8, characterized in that the refractory oxide(s) in the finely-divided state are selected from the silica-alumina system.

10. Method according to claim 9, characterized in that the mixture constituting the coating further includes at least one additional oxide selected from barium oxide and calcium oxide.

11. Method according to any one of claims 1 to 10, characterized in that the ceramic precursor polymer is selected from polycarbosilane, polytitanocarbosilane, polysilazanes, and silicones.

12. Method according to any one of claims 1 to 11, characterized in that, after the protective layer has been formed on the composite material, an outer protective layer is formed made of a composition mainly comprising a mixture of alumina and silica phosphates.

13. Method according to any one of claims 1 to 12, characterized in that to protect a composite material product whose surface is made of a refractory ceramic formed by a silicon compound, an inner protective layer is initially formed on the surface of the product, said inner layer comprising a vitreous coating based on silica with an intermediate coating interposed between the vitreous coating and the ceramic surface, the intermediate coating being made of alumina or of a precursor of alumina.

14. Product made of composite material provided with a protection against oxidation comprising at least a refractory ceramic and a healing composition, characterized in that the protection is constituted at least by a layer comprising a continuous phase of a non-oxide refractory ceramic forming a three-dimensional lattice interpenetrated by a continuous phase having healing properties by forming a glass.

15. Product of composite material according to claim 14, characterized in that the continuous phase of refractory ceramic is selected from refractory silicides, borides, nitrides, and carbides.

16. Product of composite material according to claim 15, characterized in that the continuous phase of refractory ceramic is made of silicon carbide.

17. Product of composite material according to any one of claims 14 to 16, characterized in that the protective layer further comprises fillers of refractory ceramic in finely-divided form.

18. Product of composite material according to claim 17, characterized in that the fillers are selected from refractory silicides, borides, nitrides, and carbides.

19. Product of composite material according to any one of claims 14 to 18, characterized in that the continuous phase having healing properties comprises at least one oxide selected from the silica-alumina system.

20. Product of composite material according to claim 19, characterized in that the continuous phase having healing properties further comprises at least one oxide selected from barium oxide and calcium oxide.

21. Product of composite material according to any one of claims 14 to 20, characterized in that it further comprises an outer protective layer constituted by a cement that is insoluble in water and that is formed from a mixture of alumina and silica phosphates.

22. Product of composite material according to any one of claims 14 to 20, in which the protection against oxidation is formed on a surface of the ceramic composite material constituted by a silicon compound, characterized in that the product is provided with an inner protective layer between said ceramic surface and the protective layer comprising a continuous phase of non-oxide refractory ceramic interpenetrated with a self-healing continuous phase, the inner protective layer comprising a vitreous coating based on silica and an underlying coating of alumina or a precursor of alumina.

**Patentansprüche**

1. Verfahren zur Herstellung eines Oxidationsschutzes mit wenigstens einem feuerfesten Keramikmaterial und einer heilenden Verbindung für ein Produkt aus einem Verbundwerkstoff,
   **gekennzeichnet durch**
   die folgenden Schritte:

   - auf dem zu schützenden Produkt aus Verbundwerkstoff wird ein Überzug gebildet, der ein Gemisch eines nichtoxidischen feuerfesten Keramikmaterials in feinverteilter Form, wenigstens ein feuerfestes Oxid in feinverteilter Form, das zur Bildung eines Glases heilende Eigenschaften hat, und ein Verbindungsmittel, das aus einem Polymerprecursor eines nichtoxidischen feuerfesten Keramikmaterials besteht, enthält, und
   - das Polymer wird in ein Keramikmaterial transformiert, um eine Schutzschicht zu erhalten, die eine nichtoxidische feuerfeste keramische Phase und eine heilende Phase enthält, die zwei einander durchdringende Netze bilden.

2. Verfahren nach Anspruch 1,
   **dadurch gekennzeichnet, daß**
   der Überzug auf dem Produkt aus Verbundwerkstoff ausgehend von einer flüssigen Suspension gebildet wird, die das Gemisch enthält, dem ein Lösungsmittel des Polymerprecursors des Keramikmaterials zugesetzt wird.

3. Verfahren nach Anspruch 2,
   **dadurch gekennzeichnet, daß**
   der Überzug durch Aufbringen der flüssigen Verbindung mittels Pinsel oder durch Spritzen und anschließende Beseitigung des Lösungsmittels gebildet wird.

4. Verfahren nach Anspruch 2,
   **dadurch gekennzeichnet, daß**
   der Überzug durch Eintauchen in ein Bad der flüssigen Verbindung und anschließende Beseitung des Lösungsmittels gebildet wird.

5. Verfahren nach einem der Ansprüche 1 - 4,
   **dadurch gekennzeichnet, daß**
   man dem Schritt der Bildung eines Überzugs aus dem Ruck aus Verbundwerkstoff und die Vernetzung des Polymerprecursors des Keramikmaterials vor deren Transformation wenigstens einmal wiederholt.

6. Verfahren nach einem der Ansprüche 1 - 5,
   **dadurch gekennzeichnet, daß**
   es außerdem nach der Transformation des Polymerprecursors des Keramikmaterials einen Schritt der thermischen Endbehandlung umfaßt, die bei einer Temperatur durchgeführt wird, die höher als die Schmelz- bzw. Erweichungstemperatur der heilenden Phase ist.

7. Verfahren nach Anspruch 6,
   **dadurch gekennzeichnet, daß**
   die thermische Endbehandlung dadurch durchgeführt wird, daß das Produkt direkt auf die notwendige Temperatur gebracht wird, und daß es während einer relativ kurzen Dauer in einer oxidierenden Atmosphäre auf dieser Temperatur gehalten wird.

8. Verfahren nach einem der Ansprüche 1 - 7,
   **dadurch gekennzeichnet, daß**
   das feuerfeste Keramikmaterial in feinverteiltem Zustand aus feuerfesten Karbiden, Nitriden, Boriden und Siliciden ausgewählt wird.

9. Verfahren nach einem der Ansprüche 1 - 8,
   **dadurch gekennzeichnet, daß**

das bzw. die feuerfesten Oxide in feinverteiltem Zustand aus dem System Siliciumoxid-Aluminiumoxid ausgewählt werden.

10. Verfahren nach Anspruch 9,
**dadurch gekennzeichnet, daß**
das Gemisch, das das Grundmaterial des Überzugs bildet, außerdem wenigstens ein zusätzliches Oxid enthält, das aus Bariumoxid und Calciumoxid ausgewählt wird.

11. Verfahren nach einem der Ansprüche 1 - 10,
**dadurch gekennzeichnet, daß**
der Polymerprecursor des Keramikmaterials aus Polycarbosilan, Polytitanocarbosilan, den Polysilazanen und den Silikonen ausgewählt wird.

12. Verfahren nach einem der Ansprüche 1 - 11,
**dadurch gekennzeichnet, daß**
nach Bildung der Schutzschicht auf dem Verbundwerkstoff eine externe Schutzschicht gebildet wird, die aus einer Verbindung besteht, die hauptsächlich ein Silicium- und Aluminiumoxidphosphatgemisch enthält.

13. Verfahren nach einem der Ansprüche 1 - 12,
**dadurch gekennzeichnet, daß**
zum Schutz eines Produkts aus Verbundwerkstoff, dessen Oberfläche aus einem feuerfesten Keramikmaterial besteht, das aus einer Siliciumverbindung gebildet wird, zuvor auf der Oberfläche des Produkts eine interne Schuztschicht gebildet wird, die einen glasähnlichen Überzug auf der Grundlage von Siliciumoxid mit Zwischenanordnung zwischen diesem und der keramischen Oberfläche einer Zwischenschicht aus Aluminiumoxid oder einem Aluminiumoxidprecursor enthält.

14. Produkt aus Verbundwerkstoff, das mit einem Schutz gegen Oxidation versehen ist und wenigstens ein feuerfestes Keramikmaterial und eine heilende Verbindung enthält,
**dadurch gekennzeichnet, daß**
der Schutz wenigstens durch eine Schicht gebildet wird, die eine kontinuierliche Phase aus einem nichtoxidischen feuerfesten Keramikmaterial enthält, die ein dreidimensionales Netz bildet, das von einer kontinuierlichen Phase durchdrungen ist, die heilende Eigenschaften durch Bildung eines Glases enthält.

15. Produkt aus Verbundwerkstoff nach Anspruch 14,
**dadurch gekennzeichnet, daß**
die kontinuierliche Phase des feuerfesten Keramikmaterials aus feuerfesten Karbiden, Nitriden, Boriden und Siliciden ausgewählt ist.

16. Produkt aus Verbundwerkstoff nach Anspruch 15,
**dadurch gekennzeichnet, daß**
die kontinuierliche Phase des feuerfesten Keramikmaterials Siliciumcarbid ist.

17. Produkt aus Verbundwerkstoff nach einem der Ansprüche 14-18,
**dadurch gekennzeichnet, daß**
die Schutzschicht außerdem Anteile aus feuerfestem Keramikmaterial in feinverteilter Form enthält.

18. Produkt aus Verbundwerkstoff nach Anspruch 17,
**dadurch gekennzeichnet, daß**
die Anteile aus feuerfesten Karbiden, Nitriden, Boriden und Siliciden ausgewählt ist.

19. Produkt aus Verbundwerkstoff nach einem der Ansprüche 14-18,
**dadurch gekennzeichnet, daß**
die kontinuierliche Phase, die heilende Eigenschaften hat, wenigstens ein Oxid aufweist, das aus dem System Siliciumoxid-Aluminiumoxid ausgewählt ist.

20. Produkt aus Verbundwerkstoff nach Anspruch 19,
**dadurch gekennzeichnet, daß**
die kontinuierliche Phase, die heilende Eigenschaften hat, außerdem wenigstens ein Oxid hat, das aus Barium- und Kalziumoxid ausgewählt ist.

**21.** Produkt aus Verbundwerkstoff nach einem der Ansprüche 14-20,
**dadurch gekennzeichnet, daß**
es außerdem eine externe Schutzschicht enthält, die aus einem in Wasser unlöslichen Zement besteht, der ausgehend von einem Silicium- und Aluminiumphosphatgemisch gebildet wird.

**22.** Produkt aus Verbundwerkstoff nach einem der Ansprüche 14-20,
bei dem der Schutz gegen Oxidation auf einer Oberfläche des Verbundwerkstoffes aus Keramikmaterial gebildet wird, die aus einer Siliciumverbindung besteht,
**dadurch gekennzeichnet, daß**
zwischen dieser keramischen Oberfläche und der Schutzschicht, die ein nichtoxidisches, feuerfestes Keramikmaterial enthält, das von einer heilenden kontinuierlichen Phase durchdrungen ist, das Produkt mit einer internen Schutzschicht versehen ist, die einen glasähnlichen Überzug auf der Grundlage von Siliciumoxid bildet und einen darunterliegenden Überzug aus Aluminiumoxid oder einem Aluminiumoxidprecursor.

# FIG.1

RÉSEAU Al$_2$O$_3$-SiO$_2$     RÉSEAU SiC

SURFACE EN CARBURE

# FIG.2

VISCOSITÉ

$\eta_1$

$\eta_2$

I

III

$T_1'$     $T_1$     $T_2$     $T_2'$

TEMPERATURE